(19) Europäisches Patentamt
European Patent Office
Office européen des brevets

(11) Veröffentlichungsnummer: **0 069 285**
**B1**

# (12) EUROPÄISCHE PATENTSCHRIFT

(45) Veröffentlichungstag der Patentschrift: **25.09.85**

(51) Int. Cl.⁴: **G 01 N 30/00**, G 01 N 30/96, G 01 N 27/26

(21) Anmeldenummer: **82105592.8**

(22) Anmeldetag: **25.06.82**

(54) **Verfahren und Vorrichtung zur quantitativen Bestimmung von Kationen oder Anionen durch Ionenchromatographie.**

(30) Priorität: **08.07.81 DE 3126860**

(43) Veröffentlichungstag der Anmeldung: **12.01.83 Patentblatt 83/2**

(45) Bekanntmachung des Hinweises auf die Patenterteilung: **25.09.85 Patentblatt 85/39**

(84) Benannte Vertragsstaaten: **DE FR GB**

(56) Entgegenhaltungen:
**EP-A-0 032 770**
**DE-A-2 914 807**
**FR-A-2 243 626**

(73) Patentinhaber: **BIOTRONIK Wissenschaftliche Geräte GmbH, Borsigallee 22, D-6000 Frankfurt/Main 60 (DE)**

(72) Erfinder: **Jansen, Karl-Heinz, Jahnstrasse 14, D-8034 Germering (DE)**
Erfinder: **Fischer, Karl-Heinz, Am Kochberg 14, D-6457 Maintal 3 (DE)**
Erfinder: **Wolf, Bernhard, Narzissenstrasse 4, D-8031 Puchheim (DE)**

(74) Vertreter: **Jochem, Bernd, Dipl.-Wirtsch.-Ing. et al, Patentanwälte Beyer & Jochem Staufenstrasse 36, D-6000 Frankfurt/Main (DE)**

EP 0 069 285 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur quantitativen Bestimmung der in einer Probe enthaltenen Kationen oder Anionen durch Ionenchromatographie, wonach die Probe in die Pufferlösung injiziert, mit dieser zusammen durch eine Chromatographiersäule geführt, das aus der Chromatographiersäule ausfliessende Eluat kontinuierlich einer Hintergrundentsalzung durch Ionenaustausch und danach der Leitfähigkeitsmessung unterworfen wird, und eine Vorrichtung zur Durchführung des Verfahrens

Die Erfindung knüpft an den Stand der Technik an, wie er z. B. in der DE-OS 2437600 beschrieben ist. Dort wird das grundlegende Problem, dass der Eluent eine zu hohe Eigenleitfähigkeit aufweist, um die in der Chromatographiersäule getrennten Ionenspezies durch Leitfähigkeitsmessung noch erfassen zu können, durch Hintergrundentsalzung mittels einer an die Chromatographiersäule angeschlossenen Suppressor- bzw. Abstreifsäule gelöst, die ein Ionenaustauscherharz vom entgegengesetzten Typ wie die Chromatographiersäule enthält und in der die Ionenpartner der zu bestimmenden Spezies z.B. gegen $OH^-$ oder $H^+$ getauscht werden. Nachteilig ist dabei, dass diese Hintergrundentsalzung nur diskontinuierlich betrieben werden kann, weil die Suppressorsäulen ausserhalb des analytischen Kreislaufs regeneriert werden müssen. Ausserdem verändern die Suppressorsäulen je nach Belastung und chemischer Ionenbeladung ihr chemisches und physikalisches Verhalten (pH-Wert, Diffusions-, Adsorptions- und Austauscheffekte), worunter die Reproduzierbarkeit und Genauigkeit der Analysenergebnisse erheblich leiden.

Der Erfindung liegt deshalb die Aufgabe zugrunde, die Verfahrensstufe der Hintergrundentsalzung dahingehend zu verbessern, dass sie kontinuierlich unter konstanten chemischen Bedingungen durchgeführt werden kann, und zur Lösung dieser Aufgabe wird erfindungsgemäss vorgeschlagen, dass man zur Durchführung der Hintergrundentsalzung das aus der Chromatographiersäule austretende Eluat zwischen zwei Ionenaustauscherfolien hindurchführt, die für Flüssigkeiten und für die quantitativ zu bestimmenden Ionen undurchlässig, für die entgegengesetzt geladenen Ionen dagegen durchlässig sind, zwei Elektroden so anordnet, dass mit ihnen im wesentlichen quer zur Strömungsrichtung des Eluats ein elektrisches Feld erzeugt werden kann, und jeweils zwischen Elektrode und Ionenaustauscherfolie voneinander getrennte, gleiche oder verschiedene Lösungen stark dissoziierter Elektrolyte hindurchführt, mit denen unter der Einwirkung des elektrischen Feldes die in dem Eluat verbleibenden Ionen der Puffersubstanzen in schwächer dissoziierte Verbindungen geringerer Leitfähigkeit übergeführt werden, während die entgegengesetzt geladenen Ionen der Puffersubstanzen nach Passieren der Ionenaustauscherfolien und Eintreten in die Elektrolytlösungen von diesen fortgeführt werden.

Die erfindungsgemäss zur Durchführung des neuen Verfahrens bestimmte Vorrichtung hat in bekannter Weise in Reihe geschaltet eine Quelle für die Pufferlösung, ein Probeninjektionsventil, eine Ionenaustauscherharz enthaltende Chromatographiersäule, eine weitere Ionenaustausch-Einrichtung zur Hintergrundentsalzung und eine Leitfähigkeitsmesszelle und ist dadurch gekennzeichnet, dass die Ionenaustausch-Einrichtung zur Hintergrundentsalzung einen Eluatkanal aufweist, der wenigstens teilweise durch Ionenaustauscherfolien begrenzt ist, auf deren Aussenseiten Elektrolytlösungen und Nebenräume angeordnet sind, die Elektroden enthalten, welche ein den Eluatkanal durchdringendes elektrisches Feld erzeugen.

Bevor auf die unterschiedlichen chemischen Vorgänge bei der Analyse von Anionen und Kationen näher eingegangen wird, sei zum besseren Verständnis der Erfindung zunächst der Aufbau der erfindungsgemäss die bekannte Suppressor- bzw. Abstreifsäule ersetzenden Zelle anhand der Zeichnung erläutert. Diese Zelle besteht im wesentlichen aus zwei Ionenaustauscherfolien 10, 12, die zwischen zwei Platinelektroden 14, 16 an nicht gezeigten Seitenwänden fixiert werden. Der mit 18 bezeichnete Kanal zwischen den beiden Ionenaustauscherfolien nimmt das Eluat aus der Chromatographiersäule auf. Die Platinelektroden 14, 16 sind an eine Gleichspannungsquelle angeschlossen. Bei einer angelegten Spannung zwischen 50 Volt und 550 Volt ergeben sich im Betrieb je nach den verwendeten Elektrolyten Ströme zwischen 10 mA und 1,2 A, hauptsächlich bei 200 Volt ein Stromfluss von 120 mA.

Der Abstand der Elektroden 14, 16 von den benachbarten Ionenaustauscherfolien 10 bzw. 12 kann zwischen etwa 4 mm und 50 mm, vorzugsweise bei etwa 8 mm, liegen. Die beiden Ionenaustauscherfolien haben zweckmässigerweise einen Abstand von etwa 0,1 mm bis 3 mm. Die Ionenaustauscherfolien 10, 12 und die Elektroden 14, 16 sind seitlich fluiddicht bis zu 30 bar abgedichtet, so dass im Querschnitt drei rechteckige Kanäle vorhanden sind, nämlich ausser dem bereits erwähnten Eluatkanal 18 ein mit 20 bezeichneter Nebenkanal zwischen der als Anode dienenden Elektrode 14 und der nächstliegenden Ionenaustauscherfolie 10 sowie ein weiterer Nebenkanal 22 zwischen der als Kathode dienenden Elektrode 16 und der benachbarten Ionenaustauscherfolie 12.

Die Nebenkanäle 20 und 22 nehmen als Elektrodenpuffer dienende Elektrolytlösungen auf. Beide Elektrodenpuffer müssen aus unterschiedlichen Reservoiren in vollkommen separaten Kreisläufen durch die Nebenkanäle gepumpt werden. Die chemische sowie physikalische Zuammensetzung der Elektrodenpuffer kann gleich, aber auch verschieden sein.

Die chemischen Reaktionen in der Zelle sind abhängig von der Art und Beschaffenheit der Ionenaustauscherfolien 10, 12 sowie von der Art und der Konzentration der Elektrodenpuffer und des Eluats. Die an die Elektroden 14, 16 der Zelle angelegte Spannung und der daraus resultierende

Stromfluss beeinflussen nur die Reaktionszeit, nicht aber die Reaktion als solche.

Als praktisch brauchbare Grösse der Ionenaustauscherfolien und der parallel zu diesen angeordneten Elektroden hat sich eine Länge von etwa 100 bis 500 mm, vorzugsweise 270 mm, sowie eine Breite von etwa 0,4 bis 5 mm, vorzugsweise 1 mm, herausgestellt.

Die zur Verwendung kommenden Materialien für die Ionenaustauscherfolien und die Flüssigkeit richten sich danach, ob Anionen oder Kationen chromatographisch bestimmt werden sollen. Bei der Analyse von Anionen werden Kationenaustauscherfolien, bestehend aus Vinylchlorid- oder Teflongewebe, beladen mit Sulfonsäuregruppen, verwendet, deren Dicke etwa 0,09 bis 0,2 mm, vorzugsweise 0,12 mm, beträgt und die einen elektrischen Widerstand von etwa 2,0 bis 5,9 Ω/cm² haben. Als Elektrodenpuffer kommen stark dissoziierte Mineralsäuren in Frage, hauptsächlich $H_2SO_4$, $HNO_3$ und $H_3PO_4$ in Konzentrationen von 0,001 bis 1 mol/l. Diese Elektrolytlösungen fliessen während der Analyse in den Nebenkanälen 20 und 22 im Gegenstrom zum Eluat im mittleren Kanal 18 zwischen den Ionenaustauscherfolien 10 und 12.

Die als Eluent eingesetzten Puffersysteme zur chromatographischen Trennung werden in bekannter Weise nach ihren Elutionseigenschaften für die zu trennenden Ionen ausgewählt. Darüberhinaus müssen diese Eluenten bei Austausch des Kations gegen $H^+$ entweder demineralisiertes Wasser oder eine schwach dissoziierte Verbindung (z.B. $H_2CO_3$) mit geringer Leitfähigkeit ergeben. Beispiele sind weiter unten angegeben.

Der Reaktionsablauf in der Zelle bei der chromatographischen Bestimmung von Anionen ist in der Zeichnung an einem Beispiel dargestellt. Getrennt werden Chlorid und Nitrat auf einer Anionenaustauschersäule mit Natriumhydroxid als Eluenten. Die beiden zu trennenden Anionen liegen als Kalium- bzw. Lithiumsalze in der Probe vor. Aus der zeichnerisch nicht dargestellten Chromatographiersäule treten also zeitverzögert KCl und $LiNO_3$ in NaOH direkt in die Zelle ein. Durch den Untergrund von NaOH wäre eine Identifizierung der Anionen über Leitfähigkeitsmessung oder mit ähnlichen Methoden nicht möglich.

Die Durchflussraten des Eluats durch die Zelle liegen bei 2 ml/min, d.h. bei einem Innenvolumen von 200 µl ergibt sich eine durchschnittliche Verweilzeit von 0,1 Minuten. Zwischen den Elektroden und den Folien strömt 0,15 molare $H_2SO_4$ als Elektrodenpuffer mit 0,1 ml/min.

Unter der Wirkung einer Gleichspannung von 300 V wandern die sich im Anodenraum bildenden Hydroniumionen in Stromrichtung (150 mA) zur Kathode. Da die Kationenaustauscherfolien zwar gut durchlässig sind für Kationen, jedoch undurchlässig für Anionen (Permelektivität bzw. Transportzahl 0,97), können die Sulfationen aus dem Anodenraum nicht in den Kathodenraum wandern. Parallel hierzu verhalten sich die Ionen im Eluatstrom. Volumenvermischung tritt nicht auf, da die Folien für Flüssigkeiten undurchlässig sind. Die Anionen im Eluatstrom wandern zwar im Eluatkanal 18 in Richtung Anode, können jedoch die Kationenaustauscherfolie 10 nicht durchdringen, so dass sie quantitativ konstant mit dem Eluat in die Detektorzelle befördert werden. Die Kationen im Eluatstrom wandern durch die Kationenaustauscherfolie 12 zur Kathode 16 hin in den Nebenkanal 22 und werden in der Ionenbilanz durch die aus dem Anodenraum 20 in den Eluatstrom eintretenden Hydroniumionen ersetzt. Die Wanderungsgeschwindigkeit der Kationen aus dem Eluatstrom in den Kathodenraum 22 wird über die Spannung bzw. den daraus resultierenden Stromfluss gesteuert. Darüberhinaus ist auch der osmotische Druck entscheidend. Optimal kann dies ausgenutzt werden durch Reduzierung der molaren Konzentration des Elektrodenpuffers im Kathodenraum 22 und die Erhöhung des Durchflusses an dieser Stelle. Eine Reduzierung der $H_2SO_4$ Konzentration auf $5\times10^{-3}$ mol/l mit einem Durchfluss von 0,5 ml/min zeigt keine relevanten Änderungen des Widerstandsbeiwertes der Zelle, jedoch eine erhebliche Verbesserung der Basislinienstabilität in der Leitfähigkeitsdetektorzelle.

Zusammenfassend treten folgende Reaktionen auf:

a) im Anodenraum

1. Dissoziation der $H_2SO_4$

$$H_2SO_4 \rightleftharpoons 2\,H^+ + SO_4^{2-}$$

bzw. nach Brömsted

$$H_2SO_4 + H_2O \rightleftharpoons 2\,H_3O^+ + SO_4^{2-}$$

2. Die $H^+$-Ionen (Protonen) bzw. $H_3O^+$-Ionen (Hydroniumionen) wandern in erster Näherung durch die Kationenaustauscherfolien 10 in den Eluatstrom.

Die Sulfationen wandern in Richtung Anode 14 und werden aus dem System gespült.

b) im Eluatkanal 18

1. Dissoziation von NaOH, KCl, $LiNO_3$

$$NaOH + KCl + LiNO_3 \rightleftharpoons Na^+ + K^+ + Li^+ + OH^- + Cl^- + NO_3^-$$

2. Wanderung der Kationen ($Na^+$, $K^+$, $Li^+$) in Richtung Kathode 16 durch die Kationenaustauscherfolie 12.

Wanderung der Anionen in Richtung Anode 14 an der für Anionen undurchlässigen Kationenaustauscherfolie 10 in Flussrichtung entlang. Die Anionen treten in Wechselwirkung mit dem Überangebot an Hydroniumionen aus dem Anodenraum 20.

$$Cl^- + NO_3^- + OH^- + 3\,H_3O^+ \rightleftharpoons HCl + HNO_3 + 4H_2O$$

d.h. der Eluent (NaOH) mit hoher Leitfähigkeit setzt sich zu einer Verbindung ($H_2O$) mit extrem niedriger Leitfähigkeit, und die Probenionen (KCl, $LiNO_3$) setzen sich zu Verbindungen (HCl, $HNO_3$) mit hoher Leitfähigkeiten.

c) im Kathodenraum 22

1. Dissoziation der $H_2SO_4$ wie oben beschrieben.

2. Wanderung der Hydroniumionen und der aus dem Eluatstrom kommenden Kationen zur Kathode 16 und Herausspülen aus dem System. Wanderung der Sulfationen in Richtung Anode 14 bis zur Kationenaustauscherfolie und daran entlang bis zum Herausspülen aus dem System.

Bei der chromatographischen Bestimmung von Kationen werden Anionenaustauscherfolien verwendet. Diese bestehen beispielsweise aus einem Trägergewebe aus Polyvinylchlorid oder Fluorkohlenstoffharz aus Polytetrafluoräthylen und Poly- (Perfluoräthylenpropylen), beladen mit quarternären Amoniumgruppen. Die Dicke der Folien kann z. B. zwischen etwa 0,11 und 0,15 mm und der elektrische Widerstand zwischen etwa 2,4 und 4,6 $\Omega/cm^2$ liegen. Als Elektrodenpuffer können Natronlauge und ähnliche Basen in Konzentrationen von 0,001 bis 1 mol/l durch die Nebenräume 20 und 22 fliessen. Als Eluent kommen Puffer bzw. Puffersysteme auf Säurebasis in Frage, welche die im Einzelfall gewünschten Elutionseigenschaften für die zu trennenden Kationen haben. Darüberhinaus müssen diese Eluenten, z. B. HCl oder $H_2SO_4$, bei Austausch des Anions gegen $OH^-$ entweder demineralisiertes Wasser oder eine schwach dissoziierte Verbindung mit geringer Leitfähigkeit ergeben.

Die Bewegung der Anionen und Kationen in der erfindungsgemässen Ionenaustauscherzelle verläuft bei der Kationenbestimmung analog wie oben im Zusammenhang mit der Anionenbestimmung beschrieben, wobei die $OH^-$-Ionen aus dem Kathodenraum und die Anionen im Eluatstrom in Richtung Anode durch die Anionenaustauscherfolien dringen, während die Kationen in ihren Kanälen zurückgehalten werden.

Abschliessend seien einige beispielhafte Einsatzgebiete angegeben.

| Analysenart | Eluent | Spülion | Reakt.-prod. |
|---|---|---|---|
| Anionenbestimmung | NaOH | $H^+$ | $H_2O$ |
| Anionenbestimmung | $NaHCO_3$ | $H^+$ | $H_2CO_3$ |
| Anionenbestimmung | $Na_2CO_3$ | $H^+$ | $H_2CO_3$ |
| Anionenbestimmung | $Na_2B_4O_7$ | $H^+$ | $H_3BO_3$ |
| Kationenbestimmung | HCl | $OH^-$ | $H_2O$ |
| Kationenbestimmung | $H_3PO_4$ | $OH^-$ | $H_2O$ |
| Kationenbestimmung | $HNO_3$ | $OH^-$ | $H_2O$ |
| Kationenbestimmung | $H_2SO_4$ | $OH^-$ | $H_2O$ |
| Kationenbestimmung | R-Ammonium-hydrochloride | $OH^-$ | R-Ammonium-hydroxide |

Wie aus der vorstehenden Tabelle ersichtlich, entstehen durch das erfindungsgemässe Verfahren, durchgeführt in der erfindungsgemässen Zelle mit Ionenaustauscherfolien, jeweils aus den als Eluent eingesetzten stark dissoziierten Verbindungen mit hoher Leitfähigkeit in allen Fällen schwach dissoziierte Verbindungen mit geringer Leitfähigkeit, welche die qualitative und quantitative Bestimmung der Anionen bzw. Kationen durch Leitfähigkeitsmessung nicht beeinträchtigen.

**Patentansprüche**

1. Verfahren zur quantitativen Bestimmung der in einer Probe enthaltenen Kationen oder Anionen durch Ionenchromatographie, wonach die Probe in die Pufferlösung injiziert, mit dieser zusammen durch eine Chromatographiersäule geführt, das aus der Chromatographiersäule ausfliessende Eluat kontinuierlich einer Hintergrundentsalzung durch Ionenaustausch und danach der Leitfähigkeitsmessung unterworfen wird, dadurch gekennzeichnet, dass man zur Durchführung der Hintergrundentsalzung das aus der Chromatographiersäule austretende Eluat zwischen zwei Ionenaustauscherfolien hindurchführt, die für Flüssigkeiten und für die quantitativ zu bestimmenden Ionen undurchlässig, für die entgegengesetzt geladenen Ionen dagegen durchlässig sind, zwei Elektroden so anordnet, dass mit ihnen im wesentlichen quer zur Strömungsrichtung des Eluats ein elektrisches Feld erzeugt werden kann, und jeweils zwischen Elektrode und Ionenaustauscherfolie voneinander getrennte, gleiche oder verschiedene Lösungen stark dissoziierter Elektrolyte hindurchführt, mit denen unter der Einwirkung des elektrischen Feldes die in dem Eluat verbleibenden Ionen der Puffersubstanzen in schwächer dissoziierte Verbindungen geringerer Leitfähigkeit übergeführt werden, während die entgegengesetzt geladenen Ionen der Puffersubstanzen nach Passieren der Ionenaustauscherfolien und Eintreten in die Elektrolytlösungen von diesen fortgeführt werden.

2. Verfahren nach Anspruch 1, dadurch gekennzeichnet, dass man Elektrolytlösungen mit einer Elektrolytkonzentration von 0,001 bis 1 mol/l verwendet.

3. Verfahren nach Anspruch 1 oder 2, dadurch gekennzeichnet, dass man zur quantitativen Anionenbestimmung Säuren enthaltende Elektrolytlösungen verwendet.

4. Verfahren nach Anspruch 1 oder 2, dadurch gekennzeichnet, dass man zur quantitativen Kationenbestimmung Basen enthaltende Elektrolytlösungen verwendet.

5. Verfahren nach Anspruch 1 bis 3, dadurch gekennzeichnet, dass man zur Anionenbestimmung als Kationenaustauscherfolien mit Sulfonsäuregruppen beladenes Polyvinylchlorid- oder Fluorkohlenstoffharzgewebe aus Polytetrafluoräthylen und Poly- (Perfluoräthylenpropylen) verwendet.

6. Verfahren nach Anspruch 1, 2 oder 4, dadurch gekennzeichnet, dass man zur Kationenbestimmung als Anionenaustauscherfolien mit quarternären Amoniumgruppen beladenes Polyvinylchlorid- oder Fluorkohlenstoffharzgewebe aus Polytetrafluoräthylen und Poly- (Perfluoräthylenpropylen) verwendet.

7. Verfahren nach Anspruch 1 bis 6, dadurch gekennzeichnet, dass die Elektrolytlösungen in der Richtung entgegengesetzt zur Strömungsrichtung des Eluats durch die Räume zwischen jeweils einer Elektrode und einer Ionenaustauscherfolie hindurchgeführt werden.

8. Vorrichtung zur Durchführung des Verfahrens nach Anspruch 1, im wesentlichen bestehend aus, in Reihe geschaltet, einer Quelle für die Pufferlösung, einem Probeninjektionsventil, einer Ionenaustauscherharz enthaltenden Chromatographiersäule, einer weiteren Ionenaustausch-Einrichtung zur Hintergrundentsalzung und einer Leitfähigkeitsmesszelle, dadurch gekennzeichnet, dass die Ionenaustausch-Einrichtung zur Hintergrundentsalzung einen Eluatkanal (18) aufweist, der wenigstens teilweise durch Ionenaustauscherfolien (10, 12) begrenzt ist, auf deren Aussenseiten Elektrolytlösungen und Nebenräume (20, 22) angeordnet sind, die Elektroden (14, 16) enthalten, welche ein den Eluatkanal (18) durchdringendes elektrisches Feld erzeugen.

9. Vorrichtung nach Anspruch 8, dadurch gekennzeichnet, dass die Elektrolytlösungen in den Nebenräumen (20, 22) im Gegenstrom zum Eluat im Eluatkanal (18) strömen.

10. Vorrichtung nach Anspruch 8 oder 9, dadurch gekennzeichnet, dass der Abstand der am Eluatkanal (18) gegenüberliegend angeordneten Ionenaustauscherfolien (10, 12) etwa 0,1 bis 3 mm beträgt.

11. Vorrichtung nach Anspruch 8 bis 10, dadurch gekennzeichnet, dass der Abstand der Ionenaustauscherfolien (10, 12) von den Elektroden (14, 16) etwa 4 bis 50 mm beträgt.

12. Vorrichtung nach Anspruch 11, dadurch gekennzeichnet, dass der Abstand der Ionenaustauscherfolien (10, 12) von den Elektroden (14, 16) etwa 8 mm beträgt.

13. Vorrichtung nach Anspruch 8 bis 12, dadurch gekennzeichnet, dass die Nebenräume (20, 22) auf den den Ionenaustauscherfolien (10, 12) gegenüberliegenden Seiten durch die Elektroden (14, 16) begrenzt sind.

14. Vorrichtung nach Anspruch 8 bis 13, dadurch gekennzeichnet, dass der Eluatkanal (18) und die Nebenräume (20, 22) rechteckige Querschnitte haben.

15. Vorrichtung nach Anspruch 8 bis 14, dadurch gekennzeichnet, dass die Elektroden (14, 16) aus Platin bestehen.

16. Vorrichtung nach Anspruch 8 bis 15, dadurch gekennzeichnet, dass die Ionenaustauscherfolien aus einem Polyvinylchlorid- oder Fluorkohlenstoffharzgewebe aus Polytetrafluoräthylen und Poly- (Perfluoräthylenpropylen) bestehen, welches bei der Bestimmung von Anionen an der Oberfläche mit Sulfonsäuregruppen und bei der Bestimmung von Kationen an der Oberfläche mit quarternären Amoniumgruppen beladen ist.

17. Vorrichtung nach Anspruch 16, dadurch gekennzeichnet, dass die Dicke der Ionenaustauscherfolien (10, 12) etwa 0,09 bis 0,2 mm beträgt.

18. Vorrichtung nach Anspruch 8 bis 17, gekennzeichnet durch eine an die Elektroden (14, 16) angeschlossene Gleichspannungsquelle von etwa 50 bis 550 Volt.

**Claims**

1. Method for the quantitative determination of cations or anions contained in a sample by ion chromatography, according to which the sample is injected into the buffer solution, conducted together therewith through a chromatography column, and the eluate flowing out of the chromatography column is subjected continuously to a background desalination by ion exchange and thereafter to conductivity measurement, characterised in that to carry out the background desalination the eluate flowing out of the chromatography column is conducted through between two ion exchanger sheets which are impervious to fluids and to the ions which are to be the subject of quantitative determination, but are pervious to the oppositely charged ions, and two electrodes are so arranged that with them an electrical field can be produced substantially transversely to the flow direction of the eluate, and like or different solutions, separate from one another, of strongly dissociated electrolytes are passed through between electrode and ion exchanger sheet in each case, with which under the action of the electrical field those ions of the buffer substances which remain in the eluate are converted into relatively weakly dissociated compounds of lower conductivity, whereas the oppositely charged ions of the buffer substances after passing the ion exchanger sheets and entering into the electrolyte solutions are conducted away by these.

2. Method according to claim 1, characterised in that electrolyte solutions are used which have an electrolyte concentration of 0.001 to 1 mol/l.

3. Method according to claim 1 or 2, characterised in that electrolyte solutions containing acids are used for quantitative anion determination.

4. Method according to claim 1 or 2, characterised in that electrolyte solutions containing bases are used for quantitative cation determination.

5. Method according to claims 1 to 3, characterised in that polyvinyl chloride or fluorcarbon resin fabrics, loaded with sulphonic acid groups, of polytetrafluoro ethylene and poly (perfluoro ethylene propylene) are used as cation exchanger sheets for anion determination.

6. Method according to claim 1, 2 or 4, characterised in that polyvinyl chloride or fluorcarbon resin fabrics, loaded with quaternary ammonium groups, of polytetrafluoro ethylene and poly-(perfluoro ethylene propylene) are used as anion exchanger sheets for cation determination.

7. Method according to one of claims 1 to 6, characterised in that the electrolyte solutions are conducted in the direction oppositely to the direction of flow of the eluate through the chambers between an electrode and an ion exchanger sheet in each case.

8. Apparatus for carrying out the method according to claim 1, substantially comprising, connected in series, a source for the buffer solution, a sample injection valve, a chromatography column containing an ion exchanger resin, a further ion exchange device for background desalination, and a conductivity measuring cell, characterised in that the ion exchange device for background desalination comprises an eluate channel (18) which is bounded at least partly by ion exchanger sheets (10, 12) at the outer sides of which there are arranged electrolyte solutions and secondary chambers (20, 22) containing electrodes (14, 16), which produce an electrical field passing through the eluate channel (18).

9. Apparatus according to claim 8, characterised in that the electrolyte solutions in the secondary chambers (20, 22) flow in counter-current relatively to the eluate in the eluate channel (18).

10. Apparatus according to claim 8 or 9, characterised in that the spacing of the ion exchanger sheets (10, 12) arranged in opposite positions at the eluate channel (18) amounts to approximately 0.1 to 3 mm.

11. Apparatus according to one of claims 8 to 10, characterised in that the spacing of the ion exchanger sheets (10, 12) from the electrodes (14, 16) amounts to approximately to 50 mm.

12. Apparatus according to claim 11, characterised in that the spacing of the ion exchanger sheets (10, 12) from the electrodes (14, 16) amounts to approximately 8 mm.

13. Apparatus according to one of claims 8 to 12, characterised in that the secondary chambers (20, 22) are bounded by the electrodes (14, 16) at the sides opposite the ion exchanger sheets (10, 12).

14. Apparatus according to one of claims 8 to 13, characterised in that the eluate channel (18) and the secondary chambers (20, 22) have rectangular cross-sections.

15. Apparatus according to one of claims 8 to 14, characterised in that the electrodes (14, 16) are made of platinum.

16. Apparatus according to one of claims 8 to 15, characterised in that the ion exchanger sheets are made of a polyvinyl chloride or fluorcarbon resin fabric of polytetrafluoro ethylene and poly-(perfluoro ethylene propylene) which is loaded at the surface with sulphonic acid groups in the case of determination of anions, and are loaded at the surface with quaternary ammonium groups in the case of determination of cations.

17. Apparatus according to claim 16, characterised in that the thickness of the ion exchanger sheets (10, 12) amounts to approximately 0.09 to 0.2 mm.

18. Apparatus according to one of claims 8 to 17, characterised by a DC voltage source of approximately 50 to 550 volts which is connected to the electrodes (14, 16).

**Revendications**

1. Procédé pour la détermination quantitative des cations ou anions contenus dans un échantillon par chromatographie, selon lequel on injecte l'échantillon dans un courant de solution tampon, puis on le dirige conjointement à cette solution à travers une colonne de chromatographie, l'éluat qui s'écoule hors de cette colonne chromatographique étant soumis en continu à l'élimination d'arrière-plan des sels par échange ionique, puis à la mesure de sa conductibilité, ce procédé étant caractérisé par le fait que, pour exécuter cette élimination d'arrière-plan des sels, l'éluat sortant de la colonne de chromatographie est dirigé à travers deux feuilles échangeuses d'ions, lesquelles sont imperméables aux liquides et aux ions que l'on doit déterminer quantitativement, et perméables en revanche aux ions de charge contraire, tandis que l'on prévoit deux électrodes disposées de manière qu'elles permettent de produire un champ électrique sensiblement transversal par rapport au sens de circulation de l'éluat, et suivant le cas on dirige entre l'électrode et les feuilles échangeuses d'ions des solutions identiques ou différentes, séparées entre elles, d'électrolyte fortement dissocié, avec lesquelles, sous l'influence du champ électrique, les ions des substances tampon qui subsistent dans l'éluat sont transférés dans des combinaisons plus faiblement dissociées à conductibilité inférieure, tandis que les ions de charge contraire de cas substances tampon, après avoir franchi les feuilles échangeuses d'ions et pénétré dans les solutions d'électrolyte, sont entraînées par celles-ci.

2. Procédé selon la Revendication 1, caractérisé par le fait que l'on utilise des solutions d'électrolyte ayant un concentration d'électrolyte comprise entre 0,001 et 1 mol/l.

3. Procédé selon l'une ou l'autre des Revendications 1 et 2, caractérisé par le fait que, pour procéder à la détermination quantitative d'anions, on utilise des solutions d'électrolyte contenant des acides.

4. Procédé selon l'une ou l'autre des Revendications 1 ou 2, caractérisé par le fait que, pour procéder à la détermination quantitative de cations, on utilise des solutions d'électrolyte contenant des bases.

5. Procédé selon l'une quelconque des Revendications 1 à 3, caractérisé par le fait que, pour procéder à la détermination d'anions, on utilise en tant que feuilles échangeuses de cations des tissus de chlorure de polyvinyle ou de résine d'hydrocarbure fluoré à base de polytétrafluoroéthylène et de poly-(perfluoroéthylène-propylène).

6. Procédé selon l'une quelconque des Revendications 1, 2 ou 4, caractérisé par le fait que, pour la détermination des cations, on utilise en tant que feuilles échangeuses d'anions, des tissus de chlorure de polyvinyle ou de résine d'hydrocarbure fluoré, chargés de groupes d'ammonium quarternaires, à base de polytétrafluoroéthylène et de poly-(perfluoroéthylène-propylène).

7. Procédé selon l'une quelconque des Revendications 1 à 6, caractérisé par le fait que les solutions d'électrolyte sont introduites à contre-courant dans l'éluat, à l'intérieur de chacun des espaces formés entre une électrode et une feuille échangeuse d'ions.

8. Dispositif pour la mise en œuvre du procédé selon la Revendication 1, comprenant essentiellement, en série, une source de solution tampon, un robinet pour injecter l'échantillon, une colonne de chromatographie contenant une résine échangeuse d'ions, un autre moyen échangeur d'ions pour l'élimination d'arrière-plan des sels, et une cellule de mesure de la conductibilité, ce dispositif étant caractérisé par le fait que le moyen échangeur d'ions pour l'élimination d'arrière-plan des sels se compose d'un canal à éluat (18) délimité ou moins partiellement par des feuilles échangeuses d'ions (10, 12), sur les faces externes desquelles sont prévues des solutions d'électrolyte et des espaces secondaires (20, 22) dans lesquels sont contenues les électrodes (14, 16) qui engendrent un champ électrique traversant ledit canal d'éluat (18).

9. Dispositif selon la Revendication 8, caractérisé par le fait que les solutions d'électrolyte circulent dans les espaces secondaires (20, 22) à contre-courant de l'éluat qui circule dans le canal d'éluat (18).

10. Dispositif suivant l'une ou l'autre des Revendications 8 et 9, caractérisé par le fait que la distance entre les feuilles échangeuses d'ions (10, 12) disposées en regard de part et d'autre du canal d'éluat (18) est d'environ 0,1 à 3 mm.

11. Dispositif selon l'une quelconque des Revendications 8 à 10, caractérisé par le fait que la distance entre les feuilles échangeuses d'ions (10, 12) et les électrodes (14, 16) est d'environ 4 à 50 mm.

12. Dispositif suivant la Revendication 11, caractérisé par le fait que la distance entre les feuilles échangeuses d'ions (10, 12) et les électrodes (14, 16) est d'environ 8 mm.

13. Dispositif suivant l'une quelconque des Revendications 8 à 12, caractérisé par le fait que les espaces secondaires (20, 22) prévus sur l'extérieur des feuilles échangeuses d'ions (10, 12) en regard sont délimités par les électrodes (14, 16).

14. Dispositif suivant l'une quelconque des Revendications 8 à 13, caractérisé par le fait que le canal d'éluat (18) et les espaces secondaires (20, 22) ont une section transversale rectangulaire.

15. Dispositif selon l'une quelconque des Revendications 8 à 14, caractérisé par le fait que les électrodes (14, 16) sont en platine.

16. Dispositif selon l'une quelconque des Revendications 8 à 15, caractérisé par le fait que les feuilles échangeuses d'ions sont réalisées en tissu de chlorure de polyvinyle ou résine d'hydrocarbure fluoré à base de poly-tétrafluoroéthylène et de poly-(perfluoroéthylène-propylène), lesquelles sont chargées superficiellement de groupes d'acides sulfoniques pour la détermination d'anions, et de groupes d'ammonium quarternaire pour la détermination de cations.

17. Dispositif selon la Revendication 16, caractérisé par le fait que l'épaisseur des feuilles échangeuses d'ions (10, 12) représente entre 0,09 et 0,2 mm.

18. Dispositif selon l'une quelconque des Revendications 8 à 17, caractérisé par le fait que les électrodes (14, 16) sont reliées à une source de courant continu d'environ 50 à 550 Volts.

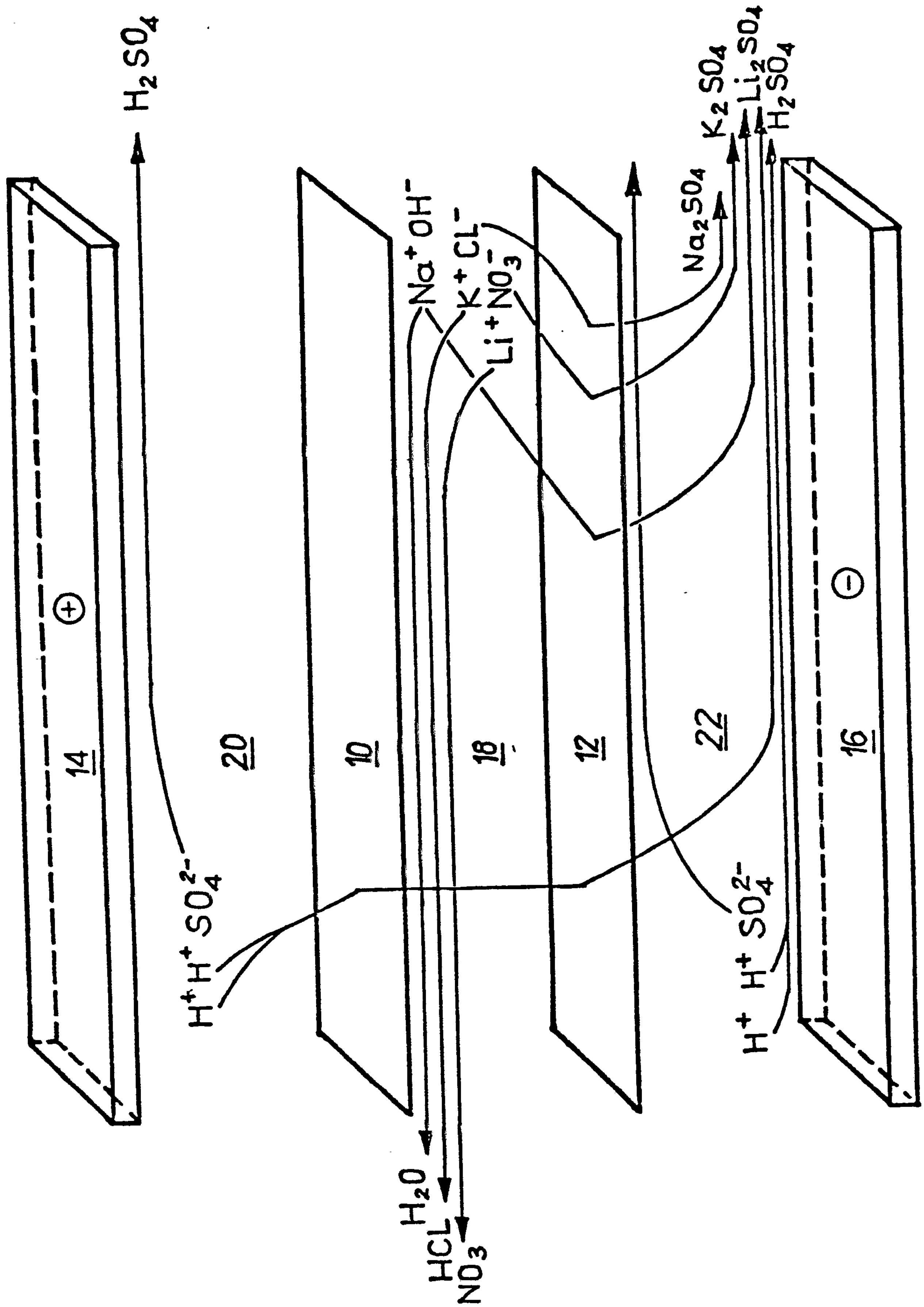

$H_2SO_4$
$Na^+ OH^-$
$K^+ Cl^-$
$Li^+ NO_3^-$
$Na_2SO_4$
$K_2SO_4$
$Li_2SO_4$
$H_2SO_4$
$H^+ H^+ SO_4^{2-}$
$H^+ H^+ SO_4^{2-}$
$H_2O$
HCl
$HNO_3$
14
20
10
18
12
22
16
+
−